# FASCICULE DE BREVET EUROPEEN

(11) **EP 2 792 580 B1**
(45) Date de publication et mention de la délivrance du brevet: **02.03.2016**
(21) Numéro de dépôt: 14161993.2
(22) Date de dépôt: 27.03.2014
(51) Int. Cl.: B62D 35/02, B62D 35/00

(54) **Ensemble de déflecteurs destinés à etre fixés sous le bouclier avant d'un véhicule automobile**
Ablenkblechanordnung zur Befestigung unter dem vorderen Stoßfänger eines Kraftfahrzeugs
Set of baffles intended for being attached under the front shield of a motor vehicle

(30) Priorité: 19.04.2013 FR 1353596
(43) Date de publication de la demande: 22.10.2014
(73) Titulaire: PEUGEOT CITROËN AUTOMOBILES SA, 78140 Vélizy-Villacoublay (FR); COMPAGNIE PLASTIC OMNIUM, 69007 Lyon (FR)
(72) Inventeur: Guinois, Pascal, 91680 Bruyeres le Chatel (FR); Penchenat, Adrien, 78990 Elancourt (FR); Gilotte, Philippe, 01470 Benonces (FR); Parra, Stephane, 69120 Vaux en Velin (FR)
(74) Mandataire: Fosse, Danièle

(56) Documents cités:
- EP-A1- 2 557 024
- CA-A1- 2 414 119
- US-A- 6 079 769
- US-A1- 2012 001 450

## Description

La présente invention concerne un ensemble de déflecteurs destinés à être fixés sous le bouclier avant d'un véhicule automobile, ces déflecteurs comprenant un déflecteur central et deux déflecteurs latéraux, ces déflecteurs étant chacun destinés à pivoter entre une position rétractée, dans laquelle ils sont rabattus sous le bouclier avant et une position déployée, dans laquelle ils font saillie vers le sol.

Un ensemble de déflecteurs suivant les caractéristiques du préambule de la revendication 1 est décrit dans le document CA-A-2 414 119.

Lorsque les déflecteurs sont déployés, ils diminuent la traînée du véhicule et permettent au véhicule de consommer moins de carburant.

Cependant, lorsque les déflecteurs sont dans cette position, ils peuvent être endommagés facilement par des obstacles faisant saillie sur le sol, tels que les bordures de trottoir.

C'est la raison pour laquelle lorsque le véhicule circule en ville ou sur des routes en mauvais état, les déflecteurs sont maintenus en position rétractée.

Le pivotement des déflecteurs vers la position déployée s'effectue généralement à une vitesse de l'ordre de 80 km/heure.

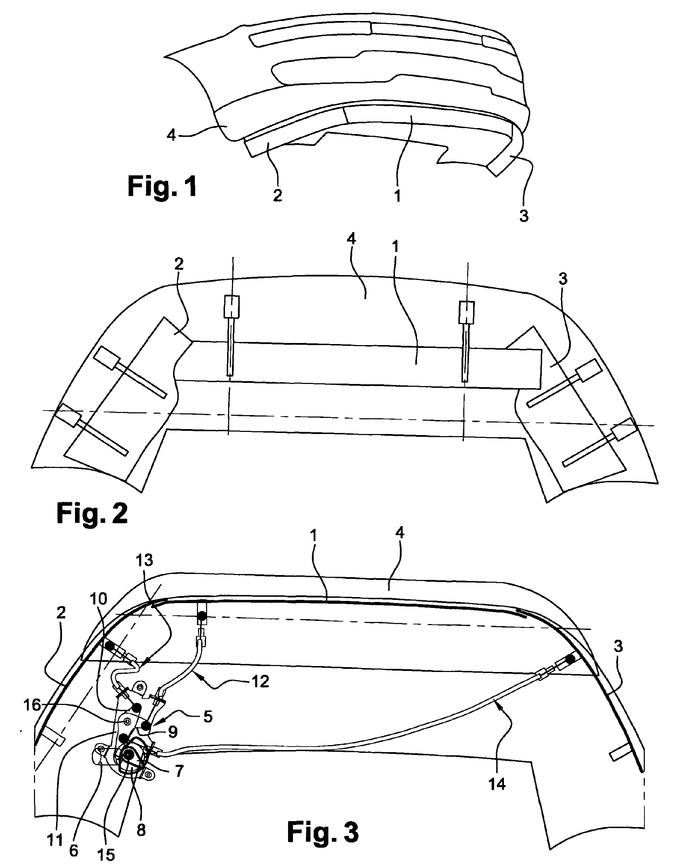

La figure 1 montre l'avant d'un véhicule automobile équipé d'un déflecteur central 1 et de deux déflecteurs latéraux 2, 3 montés pivotants sous le bouclier avant 4.

Sur cette figure 1, les déflecteurs 1, 2, 3 sont en position déployée.

La figure 2 est une vue en plan montrant le dessous du bouclier avant 4 du véhicule.

Sur cette figure 2, les déflecteurs 1,2,3 sont en position rétractée.

La figure 2 montre que lorsque les déflecteurs 1, 2, 3 sont rétractés, les bords adjacents de ces déflecteurs se recouvrent mutuellement.

De ce fait, ces déflecteurs 1, 2, 3 ne peuvent pas pivoter simultanément entre les positions rétractée et déployée et vice versa, sans interférer les uns avec les autres, ce qui les endommagerait.

Pour éviter ceci, le pivotement des déflecteurs 1, 2, 3 doit être commandé de façon séquentielle, c'est-à-dire dans un ordre prédéterminé.

Pour réaliser une telle commande séquentielle, une solution peut consister à commander le pivotement des trois déflecteurs à l'aide de trois groupes motopropulseurs distincts.

Cependant, une telle solution présente l'inconvénient d'être onéreuse et pénalisante sur le plan de la masse.

Le but de la présente invention est de remédier à cet inconvénient.

Ce but est atteint, selon l'invention, grâce à un ensemble de déflecteurs destinés à être fixés sous le bouclier avant d'un véhicule automobile, ces déflecteurs comprenant un déflecteur central et deux déflecteurs latéraux, ces déflecteurs étant chacun destinés à pivoter entre une position rétractée, dans laquelle ils sont rabattus sous le bouclier avant et une position déployée, dans laquelle ils font saillie vers le sol, ledit ensemble comprenant en outre un dispositif pour commander le pivotement des déflecteurs entre lesdites positions rétractée et déployée, caractérisé en ce que ledit dispositif comprend un groupe motopropulseur unique accouplé à deux cames coopérant respectivement avec deux leviers montés pivotants sur un support fixe et reliés par des moyens de transmission respectivement au déflecteur central et aux deux déflecteurs latéraux.

Ainsi, selon l'invention, le pivotement des trois déflecteurs n'est pas commandé séquentiellement par trois groupes motopropulseurs mais par un groupe motopropulseur unique et un système de cames coopérant avec des leviers pivotants reliés aux déflecteurs par des moyens de transmission.

Grâce à ces cames, les leviers peuvent commander le pivotement des déflecteurs de façon séquentielle avec un décalage entre ceux-ci pour éviter tout risque d'interférence et de dommage.

Dans une version préférée de l'invention, les deux cames sont fixées à un arbre d'entraînement en rotation commun.

Cet arbre commun permet de réduire encore davantage le coût de l'ensemble selon l'invention.

De préférence également, les deux leviers sont montés pivotants suivant un axe commun, ce qui permet également de réduire les coûts.

Dans un mode de réalisation avantageux de l'invention, le support fixe sur lequel sont montés pivotants les deux leviers est une platine destinée à être fixée à l'avant du véhicule, cette platine portant en outre l'arbre d'entraînement des deux cames.

Cette platine sert ainsi de support aux composants essentiels des moyens de commande du pivotement des déflecteurs.

Les moyens de transmission qui relient les leviers pivotants aux déflecteurs peuvent être des câbles montés chacun dans une gaine.

Ces moyens de transmission peuvent également être des bielles.

Selon d'autres particularités avantageuses de l'invention :
- l'une desdites cames comporte sur son pourtour deux points opposés l'un à l'autre par rapport à l'axe de rotation de la came et où l'excentrement est maximum ;
- l'autre came ne comporte sur son pourtour qu'un seul point où l'excentrement est maximum ;
- lesdits deux points de l'une des deux cames sont espacés angulairement dudit seul point de l'autre came ;
- chacun desdits leviers est relié à un ou deux moyens de transmission par un dispositif débrayable en cas d'effort excessif ;
- l'ensemble comporte un dispositif de mise sous tension de chacun des câbles reliés aux déflecteurs et auxdits leviers.

Selon un autre aspect, l'invention concerne également un véhicule automobile équipé d'un ensemble de déflecteurs selon l'invention.

D'autres particularités et avantages de l'invention apparaîtront encore tout au long de la description ci-après.

Aux dessins annexés, donnés à titre d'exemples, non limitatifs :
- la figure 3 est une vue analogue à la figure 2 montrant les déflecteurs en position déployée et le dispositif de commande du pivotement des déflecteurs,
- les figures 4 à 8 sont des vues du dispositif de commande du pivotement des déflecteurs montrant les phases successives de fonctionnement de ce dispositif,
- les figures 9 à 12 montrent une variante de réalisation du dispositif de commande comportant un dispositif débrayable en cas d'effort excessif,
- les figures 13 et 14 montrent une autre variante équipée d'un dispositif de mise sous tension des câbles.

La figure 3 représente un ensemble de déflecteurs 1, 2, 3 fixés sous le bouclier avant 4 d'un véhicule automobile.

Ces déflecteurs 1, 2, 3 comprennent un déflecteur central 1 et deux déflecteurs latéraux 2, 3.

Ces déflecteurs 1, 2, 3 peuvent chacun pivoter entre une position rétractée, dans laquelle ils sont rabattus sous le bouclier avant 4 et une position déployée (celle représentée sur la figure 3), dans laquelle ils font saillie vers le sol.

L'ensemble montré sur la figure 3 comprend en outre un dispositif 5 pour commander le pivotement des déflecteurs 1, 2, 3 entre les positions rétractée et déployée mentionnées ci-dessus.

Conformément à l'invention, le dispositif 5 comprend un groupe motopropulseur unique 6 accouplé à deux cames 7, 8 coopérant respectivement avec deux leviers 9, 10 montés pivotants sur un support fixe 11 et reliés par des moyens de transmission 12, 13, 14 respectivement au déflecteur central 1 et aux deux déflecteurs latéraux 2, 3.

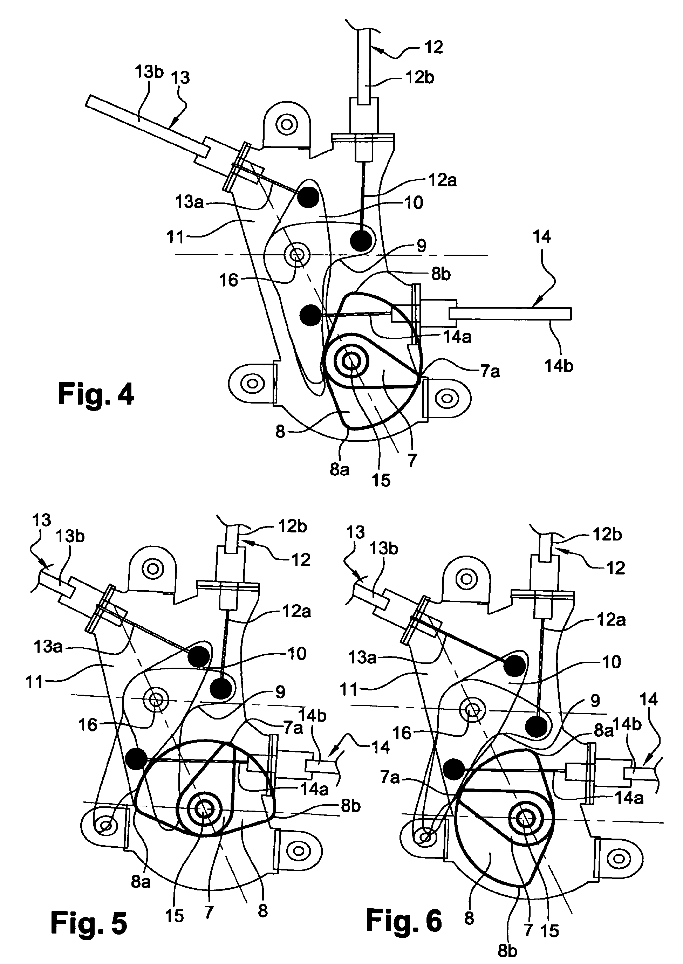

Le dispositif de commande 5 est représenté en détail sur les figures 4 à 8.

Ces figures montrent que les deux cames 7, 8 sont fixées perpendiculairement à un arbre 15 d'entraînement en rotation commun.

En outre, les deux leviers 9, 10 sont montés pivotants suivant un axe commun 16 qui est parallèle à l'arbre 15.

Le support 11 fixe est une platine en tôle destinée à être fixée à l'avant du véhicule.

Cette platine 11 porte en outre l'arbre 15 d'entraînement des deux cames 7, 8.

Dans l'exemple représenté sur les figures 3 à 8, les moyens de transmission 12, 13, 14 qui relient les leviers 9, 10 aux déflecteurs 1, 2, 3 comprennent des câbles 12a, 13a, 14a engagés respectivement dans des gaines 12b, 13b, 14b.

Le levier 10 est relié respectivement au câble 13a et au câble 14a qui sont eux-mêmes reliés aux déflecteurs latéraux 2, 3.

De ce fait, la came 8 qui est en contact avec le levier 10 commande le pivotement des deux déflecteurs latéraux 2, 3.

Le levier 9 en revanche n'est relié qu'à un seul câble 12a.

De ce fait, la came 7 qui coopère avec le levier 9 commande uniquement le pivotement du déflecteur central 1.

De plus, le levier 9 a une forme coudée, tandis que le levier 10 est sensiblement rectiligne.

La came 8 comporte sur son pourtour deux points 8a, 8b opposés l'un à l'autre par rapport à l'axe de rotation 15 et où l'excentrement est maximum, tandis que l'autre came 7 ne comporte sur son pourtour qu'un seul point 7a où l'excentrement est maximum.

Les deux points 8a, 8b de la came 8 sont espacés angulairement du seul point 7a de l'autre came 7.

On va maintenant expliquer le fonctionnement du dispositif de commande que l'on vient de décrire.

La figure 4 représente la position initiale des cames 7, 8 et des leviers 9, 10 du dispositif de commande du pivotement des déflecteurs 1, 2, 3.

Les déflecteurs 1, 2, 3 sont en position déployée comme montré sur la figure 3.

La figure 5 montre la position du dispositif après une rotation des deux cames 7, 8 de 90° dans le sens inverse des aiguilles d'une montre.

La came 8 commande lors de sa rotation le pivotement du levier 10 autour de l'axe 16.

La traction exercée par le levier 10 sur les câbles 13a et 14a provoque le pivotement des déflecteurs latéraux 2, 3 vers la position rétractée.

La came 7 a, lors de sa rotation de 90°, été inactive vis-à-vis du levier 9.

Après poursuite de la rotation des cames 7, 8, celles-ci ont atteint la position montrée sur la figure 6 où ces deux cames sont à 180° de leur position initiale.

La came 7 a fait pivoter le levier 9 qui de ce fait a exercé une traction sur le câble 12a relié au déflecteur central 1, ce qui a eu pour effet de faire pivoter celui-ci vers la position rétractée.

Ce mouvement du déflecteur 1 n'interfère pas avec les déflecteurs latéraux 2, 3, car ceux-ci sont déjà en position rétractée.

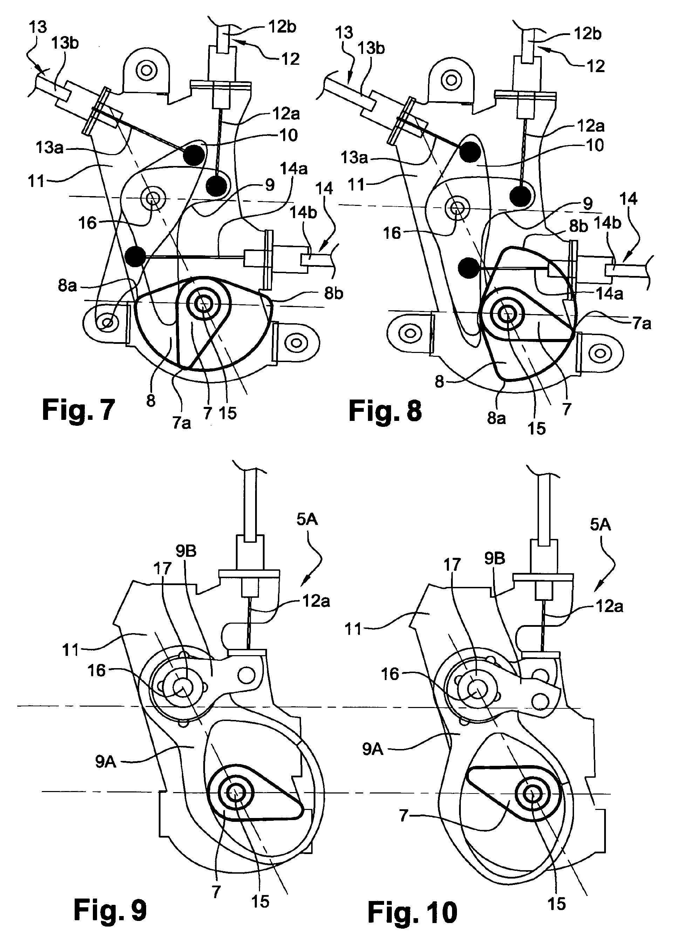

La figure 7 montre la position des cames 7, 8 après une rotation angulaire supplémentaire de 90° de celles-ci.

La rotation de 90° de la came 7 provoque le retour du levier 9 et du déflecteur central 1 vers leur position initiale.

La figure 8 montre la position des cames 7, 8 après poursuite de leur rotation, celle-ci atteignant 180° depuis la positon initiale montrée sur la figure 4.

Dans cette position, les leviers 9, 10 et les déflecteurs 1, 2, 3 ont repris leur position initiale déployée.

Cette position est maintenue grâce à des ressorts de rappel non représentés sur les figures.

Les principaux avantages de l'invention sont les suivants :
- le fait que le dispositif selon l'invention ne comporte qu'un seul motoréducteur permet de réduire son coût et sa masse,
- étant donné que le dispositif selon l'invention fait pivoter vers la position déployée d'abord le déflecteur central, puis les déflecteurs latéraux, permet de diminuer l'effort exercé par le groupe motoréducteur et donc de réduire la puissance, le coût et la masse de celui-ci.

Les figures 9 à 12 représentent une variante de réalisation du dispositif de commande selon l'invention.

Ce dispositif est désigné par la référence générale 5A.

Ce dispositif 5A comprend une came 7 montée en rotation sur un arbre 15 et coopérant avec un levier 9A monté pivotant sur un axe 16.

L'arbre 15 est entraîné en rotation par un motoréducteur non représenté.

Les axes de rotation du levier 9A et de la came 7 sont portés par une platine 11 destinée à être fixée sur un véhicule.

Le levier 9A est solidaire d'un autre levier 9B qui est relié au levier principal 9A au niveau de l'axe 16 par une pièce en matière souple 17 qui peut se déformer en cas d'effort excessif exercé sur le câble 12a relié au déflecteur central.

Ce dispositif permet par conséquent de débrayer le système en cas d'effort excessif pour éviter son endommagement.

Les figures 9, 10, 11, 12 montrent les phases successives de fonctionnement du système.

Bien entendu, ce système peut être appliqué à l'autre ou les autres leviers du dispositif de commande selon l'invention.

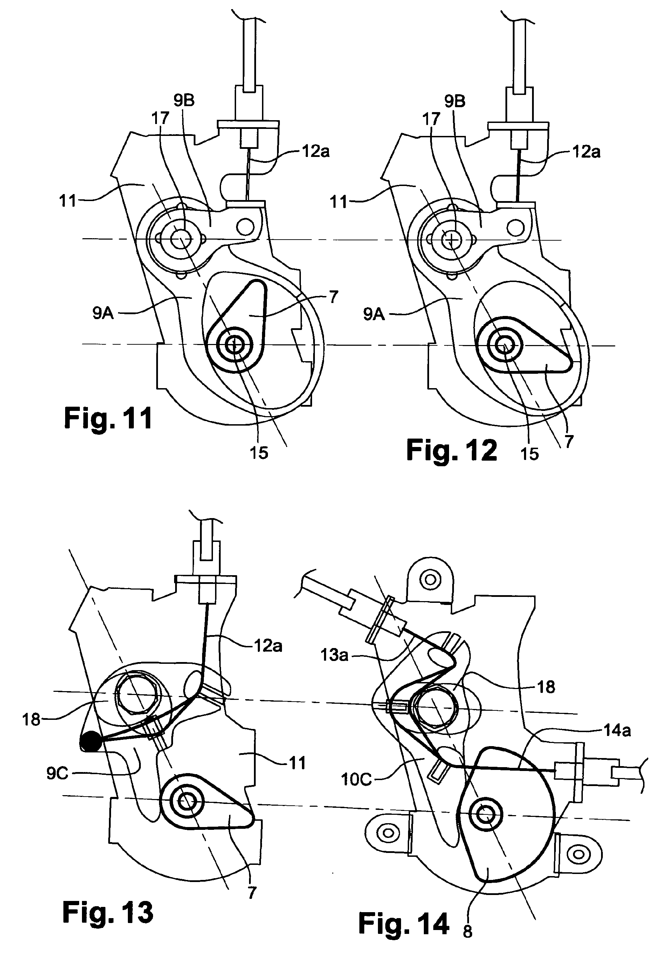

La seconde variante représentée sur les figures 13 et 14 comporte un dispositif de mise sous tension du câble 12a ou du câble 13a, 14a qui relie le levier pivotant 9C (voir figure 13) ou 10C (voir figure 14) au déflecteur central et/ou aux déflecteurs latéraux.

Ces leviers pivotants 9C et 10C sont actionnés par des cames 7 et 8, comme dans le cas de la réalisation des figures 4 à 8.

La mise sous tension du câble 12a ou 13a, 14a est réalisée au moyen d'un excentrique 18 prenant appui sur le câble et monté en rotation autour d'un axe fixe par rapport à la platine 11.

Cette mise sous tension du câble permet de régler la tension du câble, équilibrer celle-ci entre les différents câbles et régler le jeu des câbles.

## Revendications

1. Ensemble de déflecteurs (1, 2, 3) destinés à être fixés sous le bouclier avant (4) d'un véhicule automobile, ces déflecteurs (1, 2, 3) comprenant un déflecteur central (1) et deux déflecteurs latéraux (2, 3), ces déflecteurs étant chacun destinés à pivoter entre une position rétractée, dans laquelle ils sont rabattus sous le bouclier avant (4) et une position déployée, dans laquelle ils font saillie vers le sol, ledit ensemble comprenant en outre un dispositif (5) pour commander le pivotement des déflecteurs (1, 2, 3) entre lesdites positions rétractée et déployée, **caractérisé en ce que** ledit dispositif (5) comprend un groupe motopropulseur unique (6) accouplé à deux cames (7, 8) coopérant respectivement avec deux leviers (9, 10) montés pivotants sur un support fixe (11) et reliés par des moyens de transmission (12, 13, 14) respectivement au déflecteur central (1) et aux deux déflecteurs latéraux (2, 3).

2. Ensemble de déflecteurs selon la revendication 1, **caractérisé en ce que** les deux cames (7, 8) sont fixées à un arbre d'entraînement en rotation commun (15).

3. Ensemble de déflecteurs selon l'une des revendications 1 ou 2, **caractérisé en ce que** les deux leviers (9, 10) sont montés pivotants suivant un axe commun (16).

4. Ensemble de déflecteurs selon l'une des revendications 2 ou 3, **caractérisé en ce que** ledit support fixe est une platine (11) destinée à être fixée à l'avant du véhicule, cette platine (11) portant en outre l'arbre d'entraînement (15) des deux cames (7, 8).

5. Ensemble de déflecteurs selon l'une des revendications 1 à 4, **caractérisé en ce que** lesdits moyens de transmission (12, 13, 14) sont des câbles (12a, 13a, 14a) montés chacun dans une gaine (12b, 13b, 14b).

6. Ensemble de déflecteurs selon l'une des revendications 1 à 5, **caractérisé en ce que** l'une (8) desdites cames comporte sur son pourtour deux points (8a, 8b) opposés l'un à l'autre par rapport à l'axe de rotation de la came et où l'excentrement est maximum.

7. Ensemble de déflecteurs selon la revendication 6, **caractérisé en ce que** l'autre came ne comporte sur son pourtour qu'un seul point où l'excentrement est maximum.

8. Ensemble de déflecteurs selon l'une des revendications 1 à 7, **caractérisé en ce que** chacun desdits leviers (9A) est relié à un ou deux moyens de transmission (12a) par un dispositif (17) débrayable en cas d'effort excessif.

9. Ensemble de déflecteurs selon l'une des revendications 1 à 8, **caractérisé en ce qu'**il comporte un dispositif (18) de mise sous tension de chacun des câbles (12a, 13a, 14a) reliés aux déflecteurs et auxdits leviers (9C, 10C).

10. Véhicule automobile équipé d'un ensemble de déflecteurs (1, 2, 3) selon l'une des revendications 1 à 9.

## Patentansprüche

1. Ablenkblechanordnung (1, 2, 3), die dazu bestimmt ist, unter dem vorderen Stoßfänger (4) eines Kraftfahrzeugs befestigt zu sein, wobei diese Ablenkbleche (1, 2, 3) ein zentrales Ablenkblech (1) und zwei seitliche Ablenkbleche (2, 3) umfassen, wobei diese Ablenkbleche jeweils dazu bestimmt sind, zwischen einer zurückgezogenen Position, in der sie unter den vorderen Stoßfänger (4) geklappt sind, und einer ausgefahrenen Position, in der sie zu dem Boden hin vorstehen, zu schwenken, wobei die Anordnung außerdem eine Vorrichtung (5) zum Steuern des Schwenkens der Ablenkbleche (1, 2, 3) zwischen der eingefahrenen und der ausgefahrenen Position umfasst, **dadurch gekennzeichnet, dass** die Vorrichtung (5) ein einziges Motorantriebsaggregat (6) umfasst, das mit zwei Nocken (7, 8) gekuppelt ist, die jeweils mit zwei Hebeln (9, 10) zusammenwirken, die schwenkend auf einem stationären Träger (11) montiert und mit Übertragungsmitteln (12, 13, 14) jeweils zu dem zentralen Ablenkblech (1) und den zwei seitlichen Ablenkbleche (2, 3) verbunden sind.

2. Ablenkblechanordnung nach Anspruch 1, **dadurch gekennzeichnet, dass** die zwei Nocken (7, 8) an einer Antriebswelle in gemeinsamer Drehung (15) befestigt sind.

3. Ablenkblechanordnung nach einem der Ansprüche 1 oder 2, **dadurch gekennzeichnet, dass** die zwei Hebel (9, 10) gemäß einer gemeinsamen Achse (16) schwenkend montiert sind.

4. Ablenkblechanordnung nach einem der Ansprüche 2 oder 3, **dadurch gekennzeichnet, dass** der stationäre Träger eine Platte (11) ist, die dazu bestimmt ist, an der Vorderseite des Fahrzeugs befestigt zu sein, wobei diese Platte (11) außerdem die Antriebswelle (15) der zwei Nocken (7, 8) trägt.

5. Ablenkblechanordnung nach einem der Ansprüche 1 bis 4, **dadurch gekennzeichnet, dass** die Übertragungsmitteln (12, 13, 14) Kabel (12a, 13a, 14a) sind, die jeweils in einer Hülse (12b, 13b, 14b) installiert sind.

6. Ablenkblechanordnung nach einem der Ansprüche 1 bis 5, **dadurch gekennzeichnet, dass** einer (8) der Nocken auf seinem Umfang zwei Punkte (8a, 8b) umfasst, die einander in Bezug auf die Drehachse des Nockens gegenüberliegen und wo die Exzentrizität maximal ist.

7. Ablenkblechanordnung nach Anspruch 6, **dadurch gekennzeichnet, dass** der andere Nocken auf seinem Umfang nur einen einzigen Punkt, an dem die Exzentrizität maximal ist, umfasst.

8. Ablenkblechanordnung nach einem der Ansprüche 1 bis 7, **dadurch gekennzeichnet, dass** jeder der Hebel (9A) mit einem oder zwei Übertragungsmitteln (12a) durch eine bei übermäßiger Kraft auskuppelbare Vorrichtung (17) verbunden ist.

9. Ablenkblechanordnung nach einem der Ansprüche 1 bis 8, **dadurch gekennzeichnet, dass** sie eine Vorrichtung (18) zum Spannungsanlegen an jedes der Kabel (12a, 13a, 14a), die mit den Ablenkblechen und den Hebeln (9C, 10C) verbunden sind, umfasst.

10. Kraftfahrzeug, das mit einer Ablenkblechanordnung (1, 2, 3) nach einem der Ansprüche 1 bis 9 ausgestattet ist.

## Claims

1. A set of baffles (1, 2, 3) intended for being attached under the front shield (4) of a motor vehicle, these baffles (1, 2, 3) including a central baffle (1) and two lateral baffles (2, 3), these baffles each being intended to pivot between a retracted position, in which they are folded beneath the front shield (4) and a deployed position, in which they project towards the ground, said set further including a device (5) for controlling the pivoting of the baffles (1, 2, 3) between said retracted and deployed positions, **characterized in that** said device (5) includes a single power train (6) coupled to two cams (7, 8) cooperating respectively with two levers (9, 10) pivotally mounted on a fixed support (11) and connected by transmission means (12, 13, 14) respectively to the central baffle (1) and to the two lateral baffles (2, 3).

2. The set of baffles according to claim 1, **characterized in that** the two cams (7, 8) are fixed to a common rotation drive shaft (15).

3. The set of baffles according to one of claims 1 or 2, **characterized in that** the two levers (9, 10) are pivotally mounted along a common axis (16).

4. The set of baffles according to one of claims 2 or 3, **characterized in that** said fixed support is a plate (11) intended to be fixed at the front of the vehicle, this plate (11) further carrying the drive shaft (15) of the two cams (7, 8).

5. The set of baffles according to one of claims 1 to 4, **characterized in that** said transmission means (12, 13, 14) are cables (12a, 13a, 14a) each mounted in a sheath (12b, 13b, 14b).

6. The set of baffles according to one of claims 1 to 5, **characterized in that** one (8) of said cams comprises on its periphery two points (8a, 8b) opposed to one another with respect to the rotation axis of the cam and where the eccentering is maximum.

7. The set of baffles according to claim 6, **characterized in that** the other cam only comprises on its periphery a single point where the eccentering is maximum.

8. The set of baffles according to one of claims 1 to 7, **characterized in that** each of said levers (9A) is connected to one or two transmission means (12a) by a device (17) which is disengageable in the case of excessive force.

9. The set of baffles according to one of claims 1 to 8, **characterized in that** it comprises a device (18) for placing under tension each of the cables (12a, 13a, 14a) connected to the baffles and to said levers (9C, 10C).

10. A motor vehicle equipped with a set of baffles (1, 2, 3) according to one of claims 1 to 9.
